# EUROPEAN PATENT APPLICATION

(11) **EP 2 497 985 A1**
(43) Date of publication of application: **12.09.2012**
(21) Application number: 12158930.3
(22) Date of filing: 09.03.2012
(51) Int. Cl.: F16K 27/04

(54) **A mixer group for hydraulic apparatus, in particular taps, mixers, shower heads and/or the like and hydraulic apparatus provided with said mixer group**

(30) Priority: 10.03.2011 IT MI20110384
(71) Applicant: Cerutti, Silvano, 28887 Omegna (Verbania) (IT)
(72) Inventor: Cerutti, Silvano, 28887 Omegna (Verbania) (IT)
(74) Representative: Ponzellini, Gianmarco

(57) **Abstract**

A mixer group (101) for hydraulic apparatus (A), which comprises: a first member (102) having a first portion (103) with a first constraining element (104), a second portion (105a), transversal to the first portion (102), and a third portion (105b), opposite the second portion (105a) and transversal to the first portion (103). The first member (102) exhibits an intermediate portion (106) solidly constrained to the first portion (102), the second portion (105a) and the third portion (105b); a cylindrical second member (107), provided with a constraining element for removably engaging to the first member (102). The first and the second member (102, 107) delimit at least a chamber (109). The first member (102) exhibits a first, a second and a third channel (111, 114, 117) each extending from a mouth (112, 115, 117a) arranged in the chamber (109) to a mouth (113, 116, 117a) arranged in the second and the third portion (105A, 105B) across the intermediate portion (106). The chamber (109) houses a cartridge (110). The second and the first members (107,102) are realised by moulding of a plastic or nylon material and/or a like material.

## Description

### TECHNICAL FIELD

The present description relates to a mixer group for hydraulic apparatus, in particular taps, mixers, shower heads and/or the like. A further object of the present description is a hydraulic apparatus, in particular a tap, a mixer or a like liquid flow regulating device, and in particular the device is applicable to tap systems.

### TECHNOLOGICAL BACKGROUND

As is known, taps and/or mixers for water supply can be provided with respective mixer groups which include the presence of a mixer cartridge operatively arranged in a suitable housing chamber. The housing chamber is in fluid communication with two supply channels, respectively, cold water and hot water, as well as with an appropriate delivery/mixing channel. Generally, the mixer groups that are supplied together with the taps and/or the mixers currently on the market are composed of a first member of substantially cylindrical shape which exhibits a main development axis and by a second substantially tubular member, which also develops along a main direction. The first member has a first externally threaded portion, while the second member has a cavity internally threaded at an end thereof. In the mutual engagement condition, the first threaded portion of the first member is screwed to the threaded cavity of the second member in such a way that the above-mentioned housing chamber intended to accommodate the mixing cartridge is confined between these members.

Generally, the first member exhibits a second portion, opposite the first, externally provided with a second thread for engagement thereof to a further component of the tap and/or of the mixer to which it is associated.

The first and the second portion of the first member are connected by an intermediate portion across which the supply and dispensing/mixing channels which communicate with the housing chamber at least partially extend. Both the first member and the second member are completely made of an easily workable metallic material, for example brass. In fact, the through channels of the first member, as well as the cavity of the second member, are realized by means of corresponding boring operations, while the external shape thereof is formed by appropriate milling and/or other similar processes for removal of material.

Although known mixer groups are widely used, the Applicant has found that they are not free from some drawbacks and can be improved in several respects, principally in relation to the material with which they are made, the total weight thereof, the rapidity of realisation thereof, the practicalities of the manufacturing of the bodies thereof, and the total finishing and/or marketing costs. In particular, the Applicant has found that mixer groups made of brass or similar material, are particularly heavy and require long manufacturing times. Effectively the mechanical work operations for material removal require significant work times for obtaining high quality components and finishing. It should also be considered that the realization of the aforementioned members requires, on the one hand, the preparation of appropriate machine tools suitable for forming them, and on the other hand, specialized labour capable of performing such work. It should also be noted that these members are particularly expensive and considerably affect the overall cost of the taps and/or mixers to which they are associated. The high costs of the components of mixer groups obviously depend on both the high costs of the materials with which they are made, and on the complex, lengthy and costly machining by removal of material to which they have to be subjected.

### SUMMARY

A main aim of one or more of the illustrated embodiments is to provide a mixer group for hydraulic apparatus, in particular taps, mixers, shower heads and/or the like, and a hydraulic apparatus provided with the mixer group, able to obviate the problems encountered in the prior art.

Therefore an aim of some aspects described herein below is to provide a mixer group that is light and economical. A further aim according to some aspects described herein is to provide a mixer group the components of which are easy and practical to realise.

A further aim according to some aspects described herein below is to provide a mixer group the components of which are rapid to realised.

A further aim of some aspects described herein below is to provide a mixer group which reduces the overall costs of the taps and/or mixers to which they are associated.

The above-specified aims, and more besides are substantially attained by a mixer group for hydraulic apparatus, in particular taps, mixers, shower heads and/or the like, and by a hydraulic apparatus supplied by the mixer group, as expressed and described in one or more of the following claims.

The cited aims are advantageously attained by a mixer group for hydraulic apparatus, in particular taps, mixers, shower heads and/or the like, according to a first independent aspect which comprises: a first member exhibiting a first portion provided with at least a first constraining element, a second portion optionally having a substantially cylindrical conformation, provided with a first constraining element for removable engagement thereof to the first portion of the first member, in which the first and second members delimit, in reciprocal engagement conditions, at least a housing chamber, in which the first member exhibits a first through-channel which extends from a mouth arranged at the housing chamber and a mouth arranged at the second portion for enabling transit of a respective first fluid, in which the first member exhibits a second through-channel which extends from a mouth arranged at the housing chamber to a mouth arranged at the second portion for enabling transit of a respective second fluid, in which the first member comprises a third channel which extends from a mouth arranged at the housing chamber to a mouth arranged at the second portion for enabling transit of a respective mixed fluid, in which the housing chamber is configured such as to receive at least a mixer cartridge and enable a fluid communication with the first and second through-channels.

In a second aspect according to the first aspect, a mixer group is provided which further comprises at least a mixer cartridge locatable in the housing chamber resting on at least a rest surface of the second portion of the first member and in fluid communication with the first and second through-channel, in which housing chamber the mixer cartridge is blocked against the rest surface of the first member, for example by the second member.

In a third aspect according to the first or second aspect, a mixer group is provided in which at least the second member, in particular the first and second member, is made of a reinforced plastic material, in particular polyamide (PA- Nylon) and/or propylene (PP - Moplen), and/or polyarylamide (Ixef), and/or polyoxymethylene (POM - acetal), and/or polycarbonate (PC - Trirex) and/or polycarbonate alloy ABS (PC/ABS - Giasiblend), and/or polyurethane (TPU - Laripur), and/or polyphenylene sulphide (PPS - Supec) and/or polyetherimide (PEI - Ultem), and/or polybutylene terephthalate (PBT - Pibiter), and/or polysulphone (Udel) and/or polyphenyl oxide/ether (PPO/PPE - Noryl) or like materials reinforced with fibre, for example glass fibre, reinforced noryl, reinforced polypropylene, in which the second member, in particular the first and second member, is obtained by moulding of the reinforced plastic material.

In a fourth aspect according to any one of the preceding aspects, a mixer group is provided, in which the first portion exhibits a substantially cylindrical development extending along a main development axis.

In a fifth aspect according to the fourth aspect, a mixer group is provided in which the second portion of the first member develops prevalently along a development axis that is substantially parallel to the main development axis of the first portion.

In a sixth aspect according to the fourth aspect, a mixer group is provided in which the second portion of the first member develops prevalently along a development plane that is substantially transversal to the main development axis of the first portion.

In a seventh aspect according to the sixth aspect, a mixer group is provided in which the second portion exhibits a substantially L-shaped conformation, or a substantially T-shaped conformation.

In an eighth aspect according to any one of the preceding aspects, a mixer group is provided in which the first portion delimits a substantially cylindrical housing cavity internally of which a first constraining element develops, in which the constraining element of the second member develops externally thereof and remains internal of the housing cavity of the first portion of the first member when the members are reciprocally engaged by means of the respective constraining elements.

In a ninth aspect according to any one of the preceding aspects, a mixer group is provided in which the first member exhibits, at the second portion, at least a lateral cavity, which is delimited by a pair of annular seatings destined to house respective seal gaskets cooperating with a respective cylindrical cap, which is not a part of the mixer group and is keyable on the first member.

In a tenth aspect according to the ninth aspect a mixer group is provided in which the lateral cavity is in fluid communication with the housing chamber and, in particular, and is in fluid communication with the mixer cartridge.

In an eleventh aspect according to the ninth and tenth aspects, a mixer group is provided in which the third channel extends from the mouth arranged at the housing chamber to the mouth arranged at the lateral cavity through the second portion in order to enable transit of a respective mixed fluid towards the lateral cavity.

In a twelfth aspect according to any one of aspects from the first to the seventh, a mixer group is provided in which the first portion of the first member exhibits a substantially cylindrical development and the first constraining element of the first portion of the first member develops externally thereto and the second member exhibits a cavity, optionally cylindrical, suitable for defining the housing chamber in cooperation with the first member, and the constraining element of the second member develops internally of the cavity, in which the first portion of the first member remains internal of the second member when the members are reciprocally engaged by means of the respective constraining elements.

In a thirteenth aspect according to the twelfth aspect a mixer group is provided in which the first member exhibits, at the second portion, a lateral undercut in fluid communication with the housing chamber and in particular with the mixer cartridge.

In a fourteenth aspect according to the thirteenth aspect a mixer group is present in which the third through-channel extends from the mouth arranged at the housing chamber to the mouth arranged at the lateral cavity through the second portion in order to enable transit of a respective mixed fluid towards the lateral cavity.

In a fifteenth aspect according to any one of the preceding aspects, a mixer group is provided that comprises a covering element that is substantially cylindrical and/or tubular and which is keyable on the second member.

In a sixteenth aspect according to the fifteenth aspect a mixer group is provided in which the covering element is made of a metal material.

In a seventeenth aspect according to the fifteenth or sixteenth aspect a mixer group is provided in which the second member exhibits at least on an external surface thereof an annular seating provided with a seal that retains the covering element on the second member in a condition of reciprocal engagement by friction/interference.

In an eighteenth aspect according to any one of the preceding aspects, a mixer group is present in which the first constraining element comprises at least a thread exhibiting a substantially saw-tooth profile defined by a first surface having a substantially helical development which extends from the first to the second portion in a distancing direction from the respective main axis and a second surface, also having a substantially helical profile, which extends substantially perpendicularly to the main axis.

In a nineteenth aspect according to any one of the preceding aspects, a mixer group is present in which the first constraining element comprises at least a thread exhibiting a substantially saw-tooth profile defined by a first surface having a substantially helical development and being inclined with respect to the main axis and a second surface, also substantially helically-developing and extending substantially perpendicularly to the main axis; the thread of the second member is destined to engage the thread of the first portion of the first member in order to maintain the first and second members joined in order to delimit the housing chamber, in particular the second surfaces of the respective profiles being reciprocally abutting in engaged conditions of the first and second member.

In a twentieth aspect, according to any one of the preceding aspects, a mixer group is provided in which the first member is provided, for each through-channel, with at least a hollow cylindrical insert made of metal, in particular brass, or made of a plastic material, in particular different from the material of the first member, in which each hollow cylindrical insert is removably coupled to the first member at the second portion thereof and is internally threaded such as to enable removable connection of the respective through-channel to at least a conduit which is not a part of the mixer group.

In a twenty-first aspect according to the twentieth aspect, a mixer group is provided, in which each hollow cylindrical insert exhibits an external cylindrical surface provided with at least an annular channel that extends transversally to the longitudinal axis thereof, the annular channel of which receives the plastic material of the respective member, during a step of moulding thereof, such as to ensure an unremovable joining therewith.

In a twenty-second aspect according to any one of the preceding aspects, a mixer group is provided, in which the first member exhibits a plurality of lightening cavities, in particular realised by moulding.

In an independent twenty-third aspect, a hydraulic apparatus is provided, in particular a tap, a mixer or like regulating device of liquid flows, which comprises at least a dispenser device of a fluid, switchable between a non-operative condition in which it dispenses no fluid, and an operating condition, in which it dispenses at least a fluid and comprises the above-cited mixer group according to any one of aspects from one to twenty-two.

In an independent twenty-fourth aspect a mixer group for hydraulic apparatus is provided for hydraulic apparatus, in particular taps, mixers, shower heads and/or the like, the mixer group comprising: a first member exhibiting a first portion provided with at least a first constraining element, a second portion orientated transversally to the first portion, and a third portion, opposite the second portion, also orientated transversally with respect to the first portion, the first member exhibiting an intermediate portion interposed and joined in a single piece to the first, the second and the third portion; a second member, optionally having a substantially cylindrical conformation, provided with a constraining element for removable engagement thereof to the first portion of the first member, the first member and the second member delimiting, in a condition of reciprocal engagement, at least a housing chamber, the first member exhibiting a first through-channel which extends from a mouth arranged at the housing chamber to a mouth arranged at the second portion through the intermediate portion such as to enable transit of a respective first fluid, the first member exhibiting a second through-channel which extends from a mouth arranged at the housing chamber to a mouth arranged at the second portion through the intermediate portion such as to enable transit of a respective second fluid, the first member comprising a third channel which extends distancingly from a mouth arranged at the housing chamber to a mouth arranged at the third portion through the intermediate portion such as to enable transit of a respective mixed fluid, the housing chamber being configured such as to receive at least a mixer cartridge and enable a fluid communication with the first and second through-channels, the second member, in particular the first and second member, being at least partly realised in a reinforced plastic material, optionally polyamide (PA- Nylon) and/or propylene (PP - Moplen), and/or polyarylamide (Ixef), and/or polyoxymethylene (POM - acetal), and/or polycarbonate (PC - Trirex) and/or polycarbonate alloy ABS (PC/ABS - Giasiblend), and/or polyurethane (TPU - Laripur), and/or polyphenylene sulphide (PPS - Supec) and/or polyetherimide (PEI - Ultem), and/or polybutylene terephthalate (PBT - Pibiter), and/or polysulphone (Udel) and/or polyphenyl oxide/ether (PPO/PPE - Noryl) or like materials and being obtained by moulding.

In a twenty-fifth aspect according to the preceding aspect, a mixer group is provided, further comprising at least a mixer cartridge locatable in the housing chamber resting on at least a rest surface of the first portion of the first member, the mixer cartridge being in fluid communication with the first and second through-channels and being blocked against the rest surface of the first member, for example by the second member.

In a twenty-sixth aspect according to any one of the preceding twenty-fourth or twenty-fifth aspects, a mixer group is provided in which at least said second member, in particular the first and second member, is realised in a reinforced plastic material, in particular polyamide (PA- Nylon) and/or propylene (PP - Moplen), and/or polyarylamide (Ixef), and/or polyoxymethylene (POM - acetal), and/or polycarbonate (PC - Trirex) and/or polycarbonate alloy ABS (PC/ABS - Giasiblend), and/or polyurethane (TPU - Laripur), and/or polyphenylene sulphide (PPS - Supec) and/or polyetherimide (PEI - Ultem), and/or polybutylene terephthalate (PBT - Pibiter), and/or polysulphone (Udel) and/or polyphenyl oxide/ether (PPO/PPE - Noryl) or like materials reinforced with fibre, for example glass fibre, reinforced noryl, reinforced propylene, the second member, in particular the first and second members being obtained by moulding of the reinforced plastic material.

In a twenty-seventh aspect according to any one of the preceding aspects from twenty-four to twenty-five, a mixer group is provided in which first portion of the first member exhibits a substantially cylindrical envelopment, the first constraining element of the first portion of the first member developing externally of the first portion; the second member exhibits a cavity which is optionally cylindrical, suitable for defining, in cooperation with the first member, the housing chamber, the constraining element of the second member developing internally of the cavity, the first portion of the first member remaining internally of the second member when the members are reciprocally engaged by means of the respective constraining elements.

In a twenty-eighth aspect according to the preceding aspect, a mixer group is provided that comprises a tubular covering element, in particular, made of a metal material, and substantially T-shaped, keyable on the first member, in which the covering element exhibits: a first portion suitable for remaining, in the coupling condition with the first member at the first portion of the first member; a second portion, transversal to the first portion, destined to remain at the second portion of the first member; and a third portion opposite the second and transversal to the first, suitable for remaining at the third portion of the first member, the first portion of the covering element exhibiting a cavity the transversal dimensions of which are not smaller than transversal dimensions of the second member such as to receivingly engage the second member and the mixer cartridge.

In a twenty-ninth aspect according to the preceding aspect, a mixer group is provided the second member of which exhibits, on an external surface thereof, at least an annular seating provided with a seal, the seal retaining, by friction/interference, the second member with respect to the first portion of the covering element, when the first and the second member are reciprocally engaged.

In a thirtieth aspect according to any one of the preceding aspects from the twenty-fourth to the twenty-ninth, a mixer group is provided in which the first constraining element comprises at least a thread exhibiting a profile that is substantially saw-toothed defined by a first substantially helically-developing surface which extends diagonally to a longitudinal axis of the first portion of the first member and a second surface, also substantially helically developing, extending substantially perpendicular to the longitudinal axis of the first portion of the first member.

In a thirty-first aspect according to the preceding aspect, a mixer group is provided in which the constraining element of the second member comprises at least a thread exhibiting a substantially saw-toothed profile defined by a first surface that develops substantially helically and is inclined with respect to a longitudinal axis of the second member and a second surface, also substantially helical, extending substantially perpendicular to the longitudinal axis of the second member, the thread of the second member being suitable for engaging the thread of the first portion of the first member in order to maintain the first member and the second member joined such as to delimit the housing chamber, in particular the second surfaces of the respective profiles reciprocally abutting in engaged conditions of the first and the second member.

In a thirty-second aspect according to any one of the preceding aspects from 24 to 31, a mixer group is provided, at least for the first and second through-channels, with at least a hollow cylindrical insert in particular made of a metal material, in particular steel or brass, or made of a plastic material different to the material of the first member, each hollow cylindrical insert being unremovably coupled to the first member at the second portion thereof and being internally threaded such as to enable removable connection of the respective through-channel to at least a conduit which is not a part of the mixer group.

In a thirty-third aspect according to the preceding aspect, a mixer group is provided in which each hollow cylindrical insert exhibits an external cylindrical surface provided with at least an annular channel extending transversally of the longitudinal axis thereof, the annular channel accommodating the plastic material of the body, during the moulding step thereof, in order to ensure the unremovable joining therewith.

In a thirty-fourth aspect according to any one of the preceding aspects from twenty-four to thirty-three, a mixer group is provided in which the first member exhibits a plurality of lightening cavities, in particular made by moulding.

In an independent thirty-fifth aspect a hydraulic apparatus is provided, in particular a tap, mixer or like regulating device of liquid flows, comprising at least a fluid dispensing device switchable between a non-operating condition in which it does not dispense fluid, and an operating condition, in which it dispenses at least a fluid, **characterised in that** it comprises at least a mixer group according to any one of the preceding aspects from the twenty-fourth to the thirty-fourth.

### BRIEF DESCRIPTION OF THE DRAWINGS

A description now follows of preferred but not exclusive embodiments of mixer groups for hydraulic apparatus, in particular taps, mixers, shower heads and/or the like, and hydraulic apparatus provided with the mixer groups, according to the present description.

The description will be carried out with reference to the accompanying figures of the drawings, provided by way of non-limiting example, in which:
figure 1 is a perspective exploded view of a mixer group for hydraulic equipment, in particular valves, mixers, showerheads and/or the like, in accordance with a first embodiment;
figures 2 and 3 are perspective views of a component of the mixer group referred to in the preceding figure;
figure 3a shows an alternative embodiment of the component of figure 3;
figures 4 and 5 are elevation views of the component referred to in figures 2 and 3;
figures 6 to 9 are perspective views of another embodiment of the component referred to in figures 2 to 5;
figures 10 and 11 are elevation views of the component referred to in figures 6 to 9;
figure 12 is a view from below of the component referred to in figures 6 to 11 and figure 13 is a top view of the component referred to in figures 6 to 12;
figures 14 and 15 are perspective views of another component of the mixer group of figure 1;
figure 16 is an elevation view of the component referred to in figures 14 and 15 and
figure 17 is a plan view of the component referred to in figures 14 to 16;
figure 18 is a first model of hydraulic apparatus provided with the mixer group shown in figure 1,
figure 19 is a second model of hydraulic apparatus provided with the mixer group equipped with the component referred to in figures 6 to 13;
figure 20 is a third model of hydraulic equipment provided with the mixer group equipped with the component referred to in figures 6 to 13;
figure 21 is a perspective exploded view of a mixer group for hydraulic equipment, in accordance with a second embodiment;
figures 22 and 23 are perspective views of a component of the mixer group referred to in the preceding figure;
figure 24 is an elevation view of the component referred to in figures 22 and 23;
figure 25 is a longitudinal section of the component shown in figures 22 to 24;
figure 26 is a plan view of the component shown in figures 22 to 25;
figure 27 is a fourth model of hydraulic equipment, in particular a valve, a mixer or a similar device for adjusting liquid flow, provided with the mixer group shown in figure 21;
figure 28 is a perspective representation of an element of the apparatus of the preceding figure;
figure 29 is an elevation view of the element referred to in the preceding figure;
figure 30 is a plan view of the element of figures 28 and 29;
figures 31 and 32 are perspective representations of a covering element of figures 28 to 30;
figure 33 is a section of the covering shown in figures 31 and 32;
figure 34 is a plan view of the covering shown in figures 31 to 33;
figure 35 is an exploded perspective view of a fifth model of hydraulic apparatus provided with a mixer group, in accordance with a third embodiment;
figure 36 is a perspective view of the apparatus together with the hydraulic apparatus shown in figure 35;
figures 37 to 40 are perspective views of a component of the mixer group in hydraulic apparatus as shown in figures 35 and 36;
figures 41 and 42 are elevation views of the component shown in figures 37 to 40;
figure 43 is a plan view of the component shown in figures 37 to 42;
figures 44 and 45 are perspective views, respectively, exploded and assembled, of a first bracket model used in combination with the hydraulic equipment in accordance with what is described;
figures 46 and 47 are perspective views, respectively, exploded and of assembly, of a second model of the bracket used in combination with the hydraulic equipment in accordance with what is described;
figures 48 and 49 are perspective views of a component of the brackets of figures 44 to 47;
figure 50 is an elevation view of the component shown in figures 48 and 49;
figure 51 is an elevation view in plan of the component shown in figures 48 to 50;

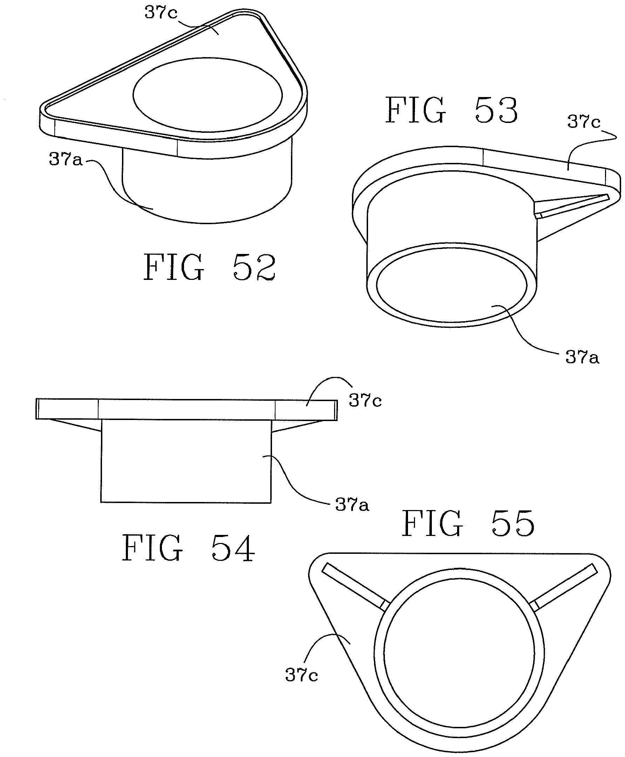

figures 52 and 53 are perspective views of a further component of the brackets of figures 44 to 47;
figure 54 is an elevation view of the component shown in figures 52 and 53;
figure 55 is a plan view of the component shown in figures 52 to 54;
figures from 56 to 58 respectively show a perspective, an enlarged particular and a section of a covering element for use in the hydraulic apparatus referred to in figures 18 and 27;
figures 59 to 61 show respectively a perspective, an enlarged and a section of a cladding element alternative to that of the previous figures from 56 to 58 for use in hydraulic apparatus referred to in figures 18 and 27.
figure 62 is an exploded perspective view of a sixth model of hydraulic equipment provided with a mixer group, in accordance with a fourth embodiment;
figures 63 and 64 are respectively a perspective view and a plan view of a component of figure 62;
figure 65 is an exploded perspective view of a seventh model of hydraulic equipment provided with a mixer group, in accordance with a fourth embodiment; and
figures 66 and 67 are respectively a perspective view and a plan view of a component of figure 65.

### DETAILED DESCRIPTION

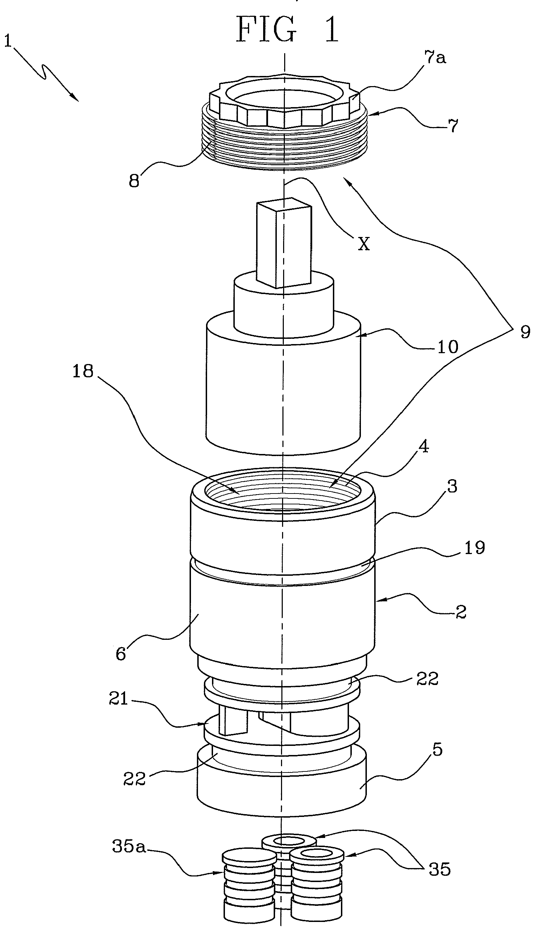

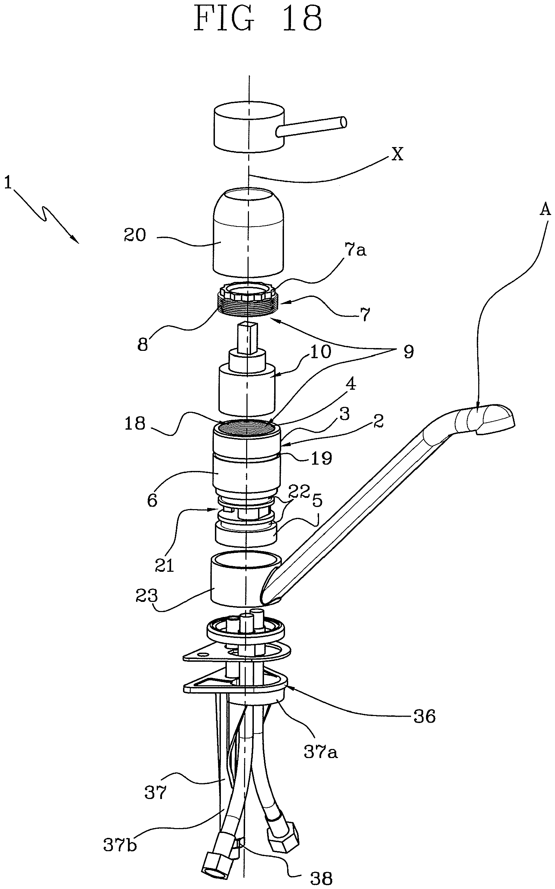

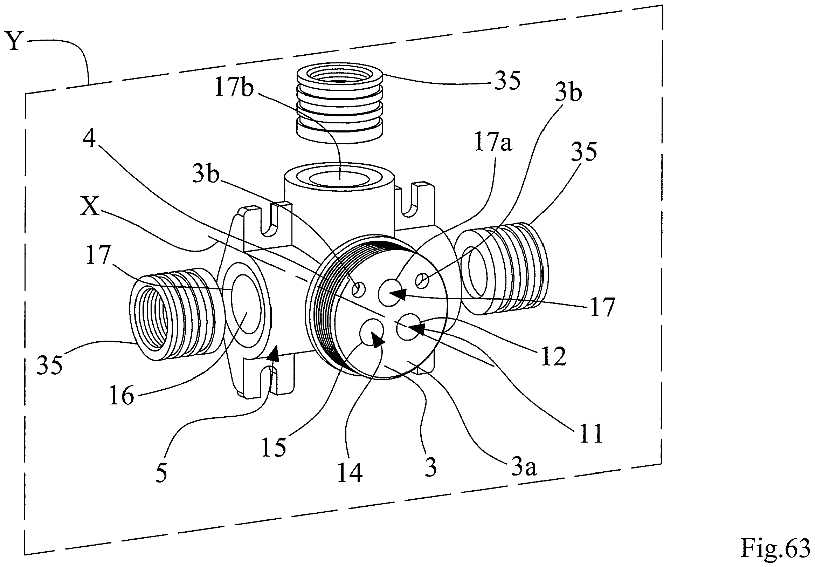

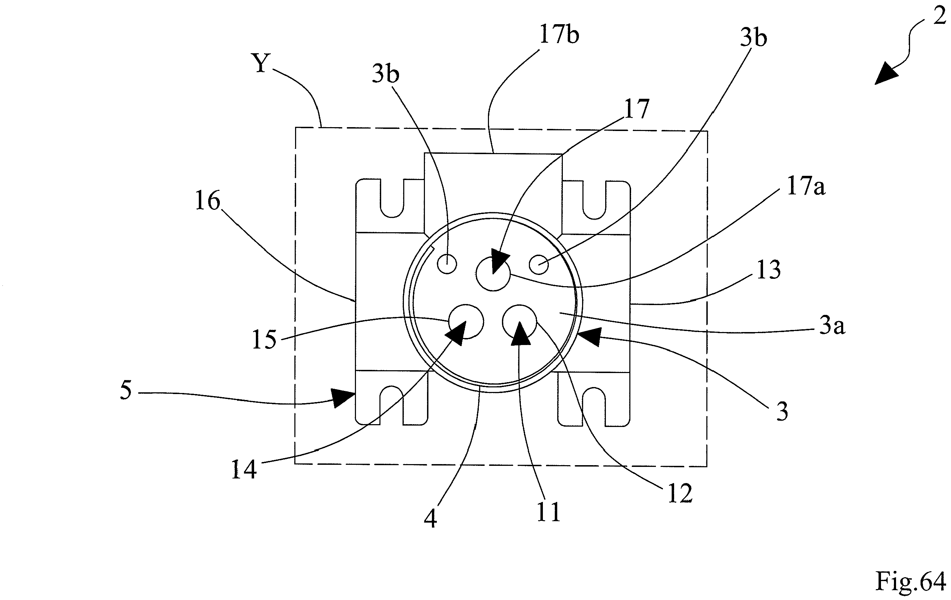

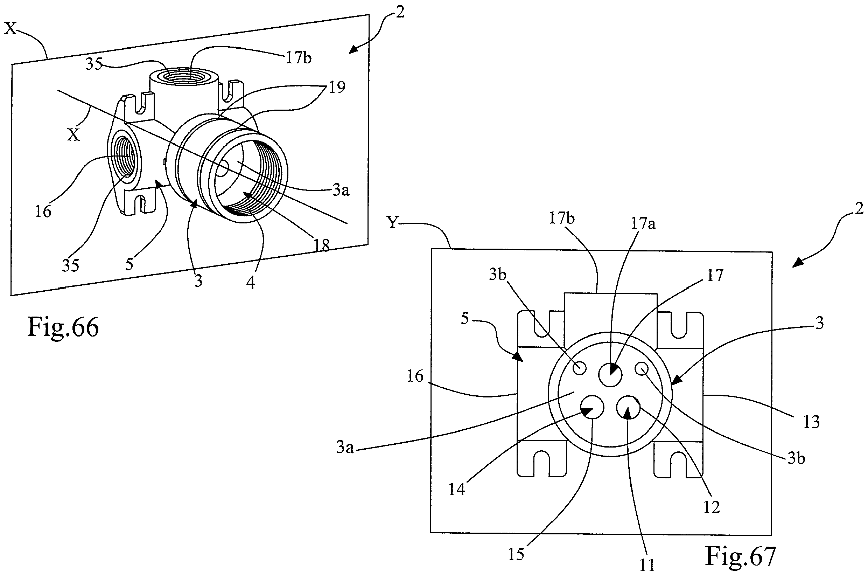

With reference to figures 1, 18 to 21, 27, 34, 62 and 65, number 1 denotes in its entirety a mixer group for hydraulic apparatus, in particular valves, mixers, shower heads and/or the like. Figures 18, 19, 20, 27, 35, 62 and 65 show different models of hydraulic apparatus A. In accordance with the embodiments illustrated in figures 1, 18 to 21, 27 and 62 to 67 the mixer group 1 comprises a first member 2 which exhibits a first portion 3 provided with at least a first constraining element 4 and a second portion 5, optionally opposite the first portion 3, which extends along a main axis of development X of the first portion 3. The first portion 3 is integrally joined to the second portion 5 of the first member 2.

Again with reference to figures 1, 18 to 21, 27 and 62 to 67 the mixer group 1 also comprises a second member 7 optionally having a substantially cylindrical shape. The second member 7 is provided with a constraining element 8 (figures 1, 14 to 19, 23 and 25) for removable engagement thereof with the first portion 3 of the first member 2. Advantageously, the first and the second member 2, 7 delimit, in a condition of reciprocal engagement, at least a housing compartment 9 configured such as to receive at least a mixer cartridge 10.

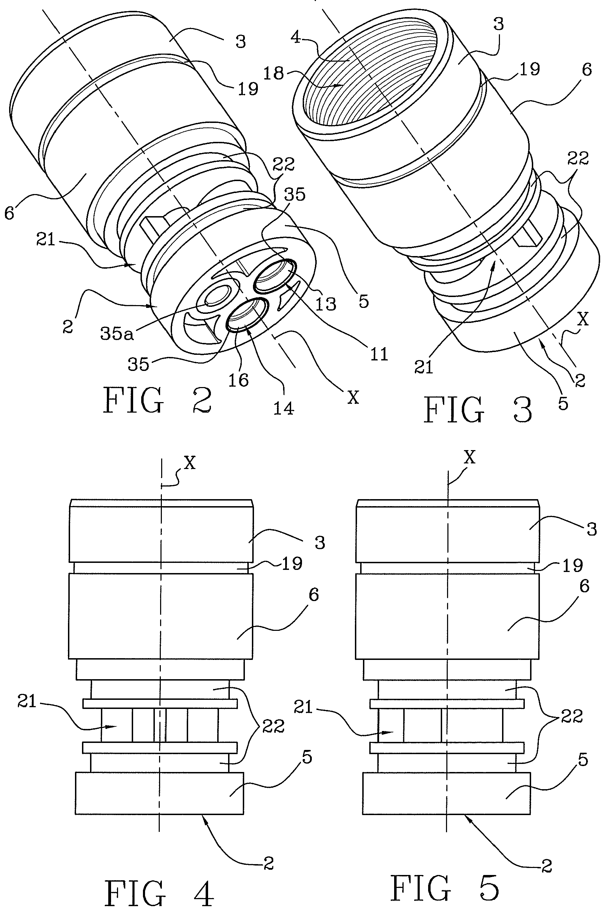

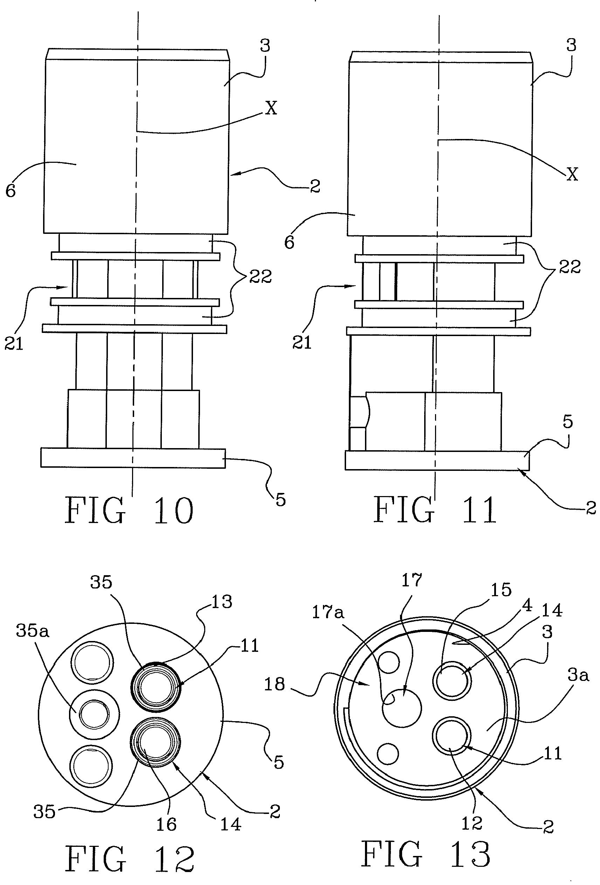

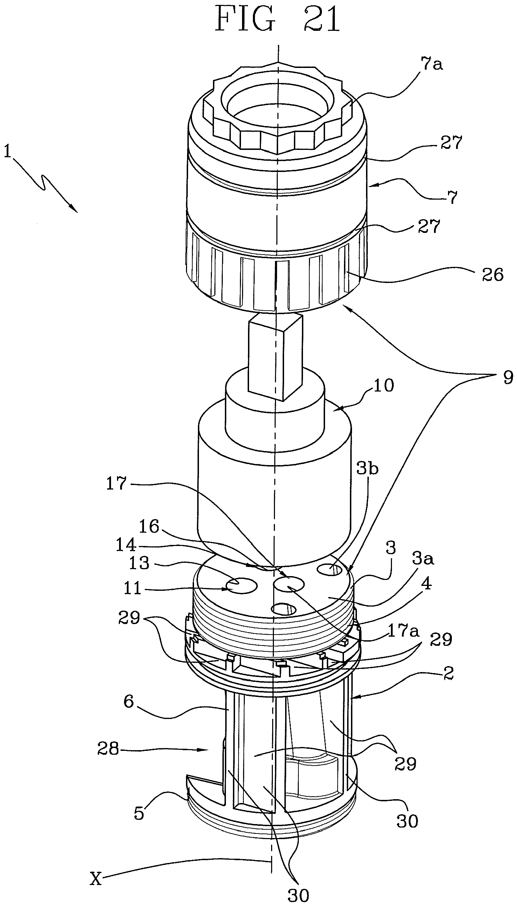

The first member 2 further exhibits a first through-channel 11 (figures 2, 6, 12, 13, 63, 64, 66 and 67) which extends from a mouth 12 (figures 12, 21, 27, 63, 64, 66 and 67) arranged at the housing compartment 9 to a mouth 13 (figures 2.6, 64 and 67) arranged at the second portion 5. The first through channel 11 extends across the second portion 5 in order to enable transit of a respective first fluid, preferably hot water. The first member 2 has a second through channel 14 (figures 2, 6, 12, 13, 63, 64, 66 and 67) which extends from a mouth 15 (figures 12, 21, 27, 63, 64, 66 and 67) arranged at the housing compartment 9 to a mouth 16 (figures 2, 6, 64 and 67) arranged at the second portion 5 in order to enable transit of a respective second fluid, preferably cold water. The first member 2 comprises a third through channel 17 (figure 21) which extends from a mouth 17a (figure 21), arranged at the housing compartment 9, to a mouth 17b arranged at the second portion 5 such as to enable transit of a respective mixed fluid of hot water and cold water. In detail, the housing compartment 9 is destined to accommodate the above-mentioned mixer cartridge 10 such as to put the cartridge 10 in fluid communication with the first and the second through channel 11, 14.

In an advantageous aspect the mixer cartridge 10 forms part of the mixer group 1. It should however be noted that the mixer cartridge 10 may also not be included in the mixer group 1 being an active part of a respective hydraulic apparatus A, such as for example a valve, a mixer, a hand shower and/or a like device, to which the mixer assembly 1 is associated. As shown in the accompanying figures the mixer group 10 comprises at least a regulating element 10a which is configured such as to receive a regulating element of an auxiliary manoeuvring element 10b. The manoeuvring element is an element which does not form part of the mixer group, but is included in the hydraulic apparatus A.

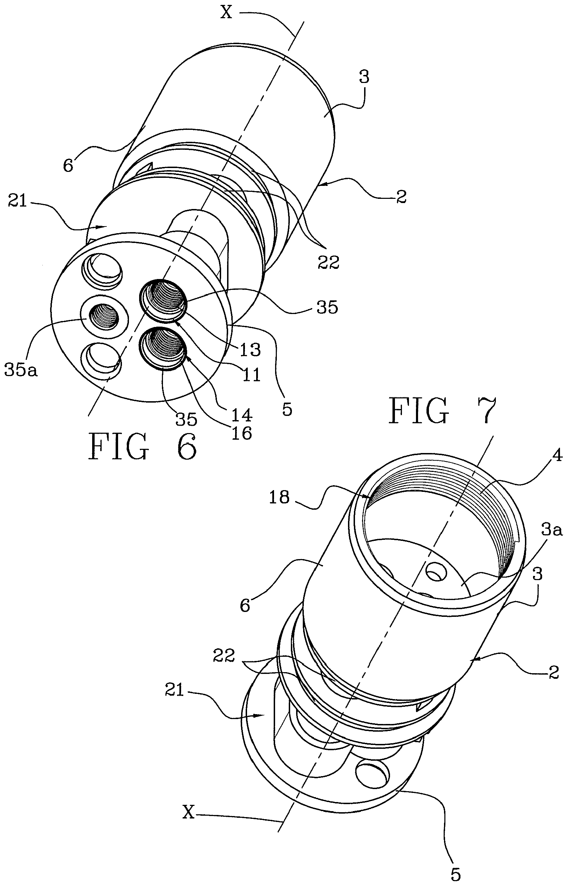

In greater detail, in the working condition the apparatus enables engaging the auxiliary regulating element with the regulating element. In this way, by acting directly on the manoeuvring element the mixer cartridge 10 can also be moved. In greater detail the manoeuvring element 10b enables regulating the flow passage in arrival from the channels 11 and 14 and consequently regulating of the outlet flow from the passage 17 of the mixed fluid. With the aim of enabling optimum engagement of the mixer cartridge 10 to the first member 2 and the second member 7 inside the housing compartment 9, the first portion 3 has a supporting surface 3a (figures 7, 13, 21, 27 , 63, 66 and 67) that is destined to support the mixer cartridge 10. In other words, the mixer cartridge 10 is placeable in the housing compartment 9, resting on the supporting surface 3a of the first member 2.

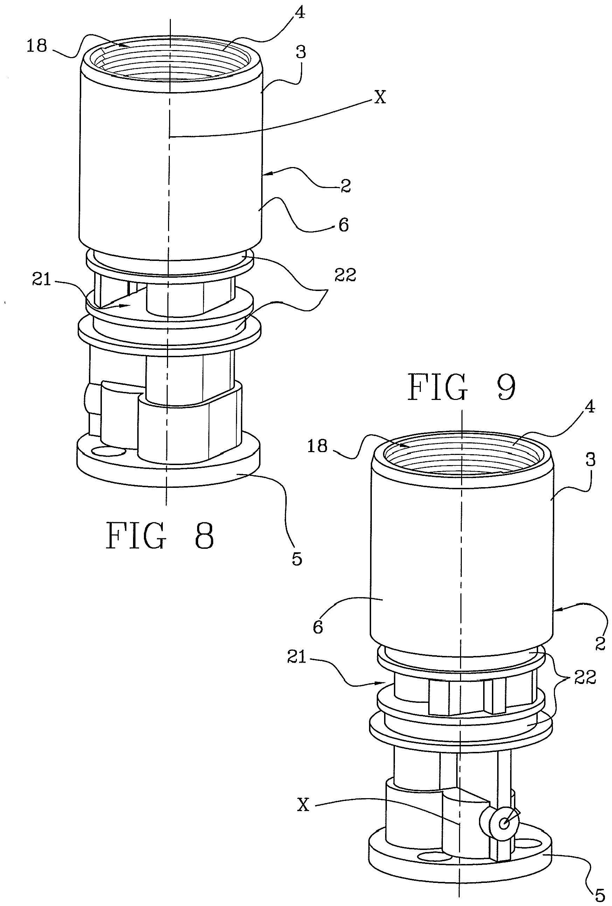

When the mixer group 1 is in the assembled condition, the mixer cartridge 10 advantageously remains blocked against the rest surface 3a of the first member 2, for example by action of the second member 7 which engages the first member 2. The portion 3 is also equipped with at least two seatings 3b suitable for centring the mixer cartridge. The seatings 3b, in the assembled condition of the mixer group 1, engage in respective pins of the mixer cartridge 10 thereby allowing for a correct assembly between the cartridge 10 and the first member. In addition to enabling an excellent engagement, the seatings 3b ensure a correct fluid communication between the first member 2 and the mixer cartridge 10. In accordance with the embodiments illustrated in figures 1 to 20 and from 65 to 67, the first portion 3 of the first member 2 has a substantially cylindrical development and extends along a main axis of development (X). In accordance with the first embodiment, illustrated in figures 1 to 21, the second portion extends along a development axis that is substantially parallel to the development axis (X) of the first portion.

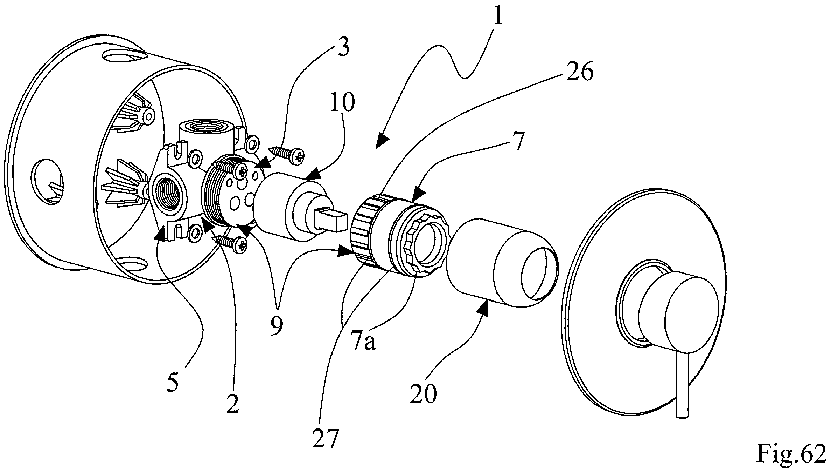

In a further embodiment, illustrated in figures 62 to 67, the second portion 5 extends mainly along a plane of development (Y) that is substantially transversal to the main axis of development (X) of the first portion (3). In this further embodiment, the second portion has a substantially L-shape or a substantially T-shape. In more detail, the second portion in an L-shape (not represented in the accompanying figures) has a first end suitable for receiving the channels 11 and 14, in particular the respective mouths 13 and 16, and a second end suitable for receiving the channel 17, especially the mouth 17b.

As instead regards the configuration "T" (visible in figures 62 to 67), the second portion has a first, a second and a third end destined to receive respectively the first, second and third channel 11, 14, 17. The first portion 3 of the first member 2 advantageously defines a substantially cylindrical housing cavity 18 (figures 1, 3, 7 to 9, 13 and 18 to 20 and 66) inside which the first engaging member 4 develops. In this case, the second member 7 has a substantially annular conformation and the coupling element 8 thereof develops externally. On the opposite side to the constraining element 8, the second member 7 has a portion with sharp edges 7a (figures 1, 14 to 17, from 18 to 20, 62 and 65) destined to be engaged by a tool or similar instrument (not shown) destined to operate the engagement of the first member 2 to the second member 7.

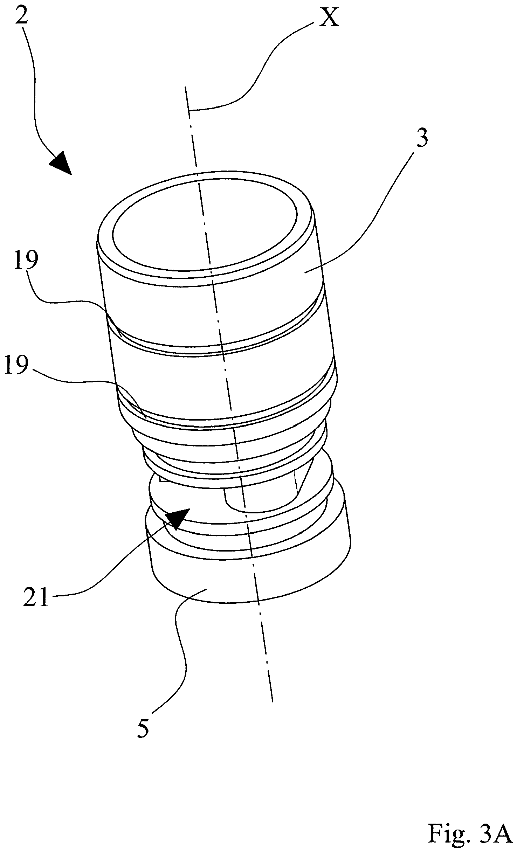

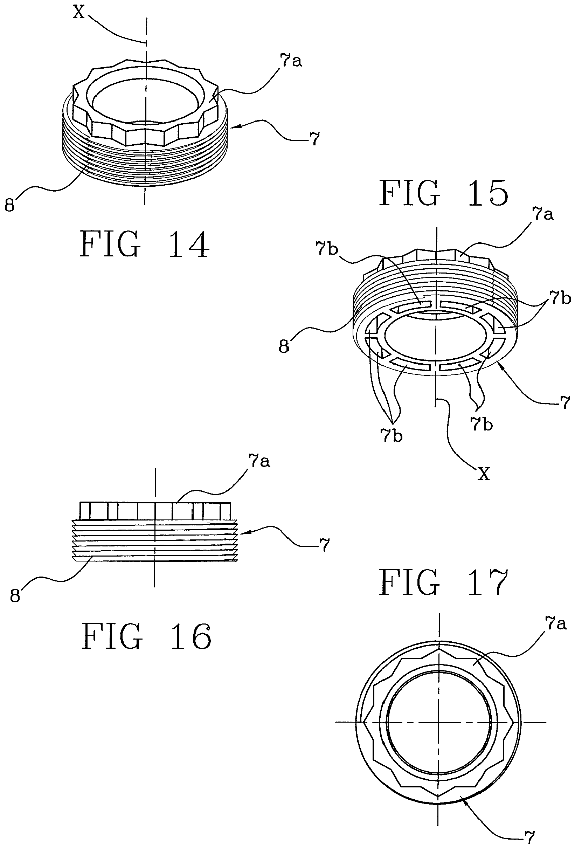

As shown in figure 15, the second member 7 exhibits a plurality of blind lightening openings 7b which extend substantially parallel to the main axis (X) for developing the first member 2. When the first member 2 and the second member 7 are reciprocally engaged, the coupling element 8 of the second member 7 remains inside the housing cavity 18 of the first portion 3 of the first member 2. The cooperation between the coupling element 8 of the second member 7 and the first constraining element 4 of the first member 2 ensures solid engagement of the members 2 and 7. As shown in figures 1 to 5 and 18, at least one of the two members 2, 7 has, optionally on an outer surface thereof, at least an annular seating 19 provided with a seal (not shown because of known type). In detail, the above-mentioned annular seating 19 is fashioned on the outer surface of the first portion 3 of the first member 2. The gasket which engages the aforementioned annular seating 19 is advantageously configured such as to retain, by friction/interference, a covering element 20 (figure 18) keyed at least on the first member 2, preferably on both members 2 and 7. In the embodiment illustrated in figure 3a it is shown how two seatings can be realised for axially spaced gaskets 19 that can improve the retaining in position.

The covering element 20 has a substantially cylindrical or tubular conformation having a narrow thickness, and is advantageously made of a metal material, in particular brass, aluminium, stainless steel or another according to needs. In fact, the reduced thickness means that this element can be obtained by deformation of a tubular segment of appropriate size and thickness with extremely reduced purchase and machining costs, such as to render the choice of material irrelevant from the point of view of costs.

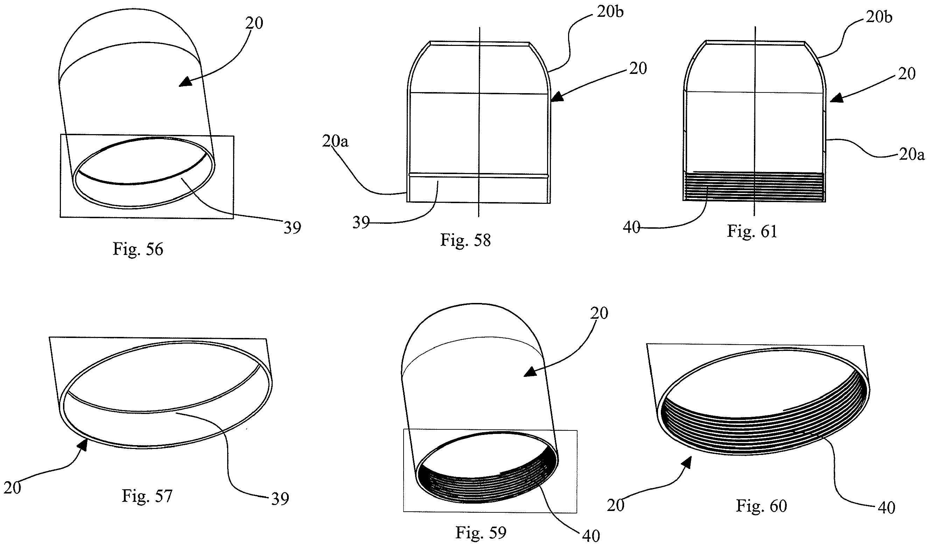

As shown in figures 56, 57 and 58 the covering element 20 can be internally provided with a seating 39 for a gasket in order to retain by friction/interference, the covering element 20 fitted at least on the first member 2 and preferably on both members 2 and 7. The alternative, shown in figures 59, 60 and 61, illustrates the covering element 20 provided with a thread engagement 40 which enables it to be correctly and solidly constrained on the first member 2 and/or on the member 7.

With reference to figures 1 to 11 and 18 to 20, the first member 2 extends mainly along the axis of development (X) and has, in correspondence of the second portion 5, at least a lateral cavity 21. The lateral cavity 21 is advantageously delimited by a pair of annular seatings 22 adapted to accommodate respective sealing gaskets (not shown as of known element) cooperating with a respective cylindrical cap 23 (figures from 18 to 20), not being part of the mixer group 1 since it is a component of the respective hydraulic apparatus A, to which the mixer group 1 is associated. As shown in figure 18, the cylindrical cap 23 is keyable on the first member 2 on the opposite side with respect to the covering element 20.

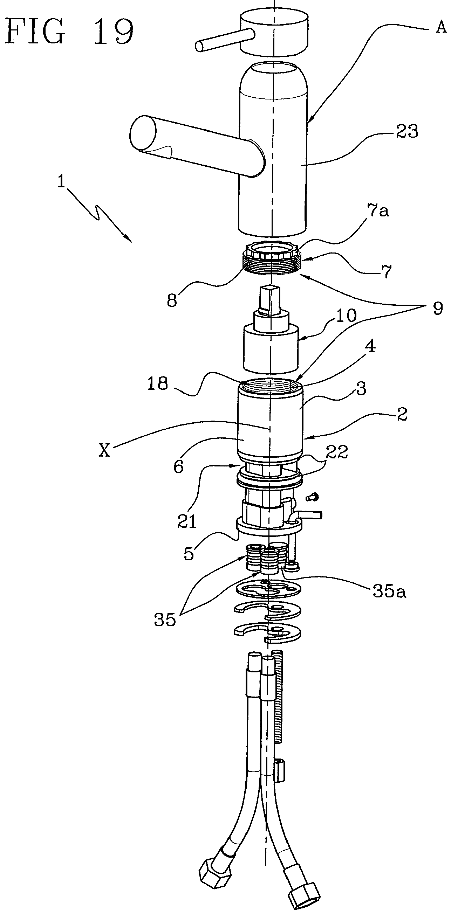

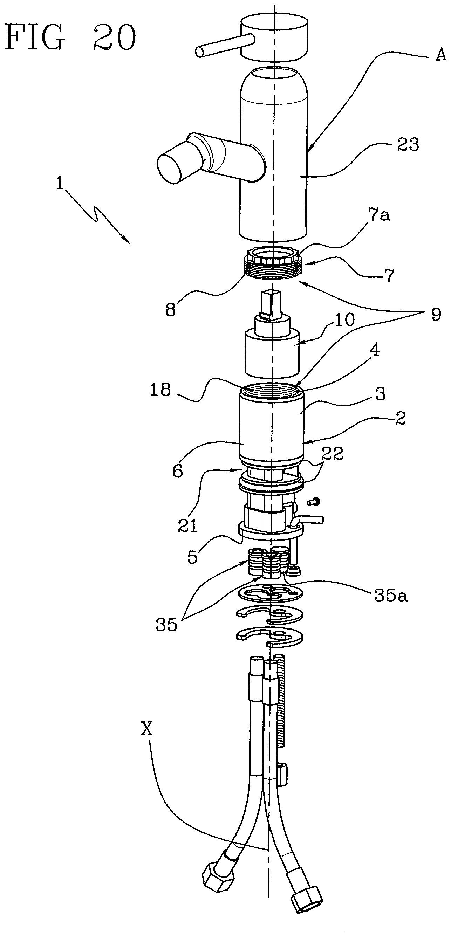

Obviously, the covering 23 referred to in figures 19 and 20 may also be configured as the element 20, i.e. it may provide a seat for a retaining gasket or even a screw thread engagement. In agreement with the embodiments illustrated in figures 19 and 20, the sealing gaskets engaged in the annular seatings 22 are advantageously configured so as to retain, by friction/interference, the cylindrical cap 23 of the hydraulic apparatus A. In this case, since the cylindrical cap 23 extends along to the entire length of the members 2, 7 when the members are in a condition of mutual engagement figures 6 to 11, 19 and 20 show that the first portion 3 of the first member 2 can be devoid of the above-mentioned annular seating 19 and the respective friction surface. In this case, the gaskets of the annular seatings 22 also perform the task of retaining the cylindrical cap 23 by friction/interference.

In addition to the above-mentioned gasket 22, for locking the cylindrical shell on said first and second member at least one engaging member 23d can be used (shown in figure 19), in particular a screw. The engaging member 23d, once the cylindrical cap 23 has been positioned, crosses the cap 23 and engages to the first and/or the second member of the mixer group such as to prevent disengaging of the cap from the first and the second member. The lateral cavity 21 is advantageously in fluid communication with the housing compartment 9 and, in particular, with the mixer cartridge 10.

The third channel 17 of the first member 2 optionally has a mouth 17b (not visible) arranged at the lateral cavity 21 in order to enable transit of the respective mixed fluid from the mouth 17a towards the lateral cavity 21 and consequently towards a respective component of the hydraulic apparatus A to which the mixing unit 1 is associated. In accordance with the embodiments shown in figures 1 to 5 and 18, the first member 2, in particular the second portion 5, develops along the main axis of development (X) to a predetermined extent.

Naturally, the length of the first member 2 may vary depending on the requirements and the structure of the hydraulic apparatus A to which the mixing unit 1 is associated, and can therefore be shorter (figures 1 to 5 and 18) or longer (figures 6 to 11, 19 and 20). In accordance with the embodiment shown in figures 21 to 27 and 62 to 64, the first portion 3 of the first member 2 of the mixing unit 1 has a substantially cylindrical development. In this case, the first constraining element 4 (visible only in figure 21) of the first portion 3 of the first member 2 extends externally and the rest surface 3a of the first member 2 coincides with the upper surface of the first portion 3 thereof.

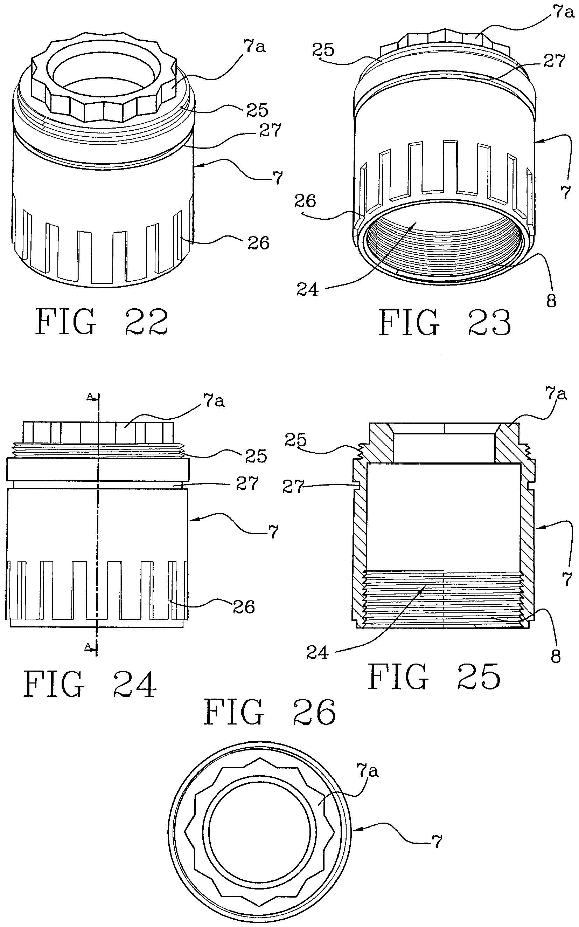

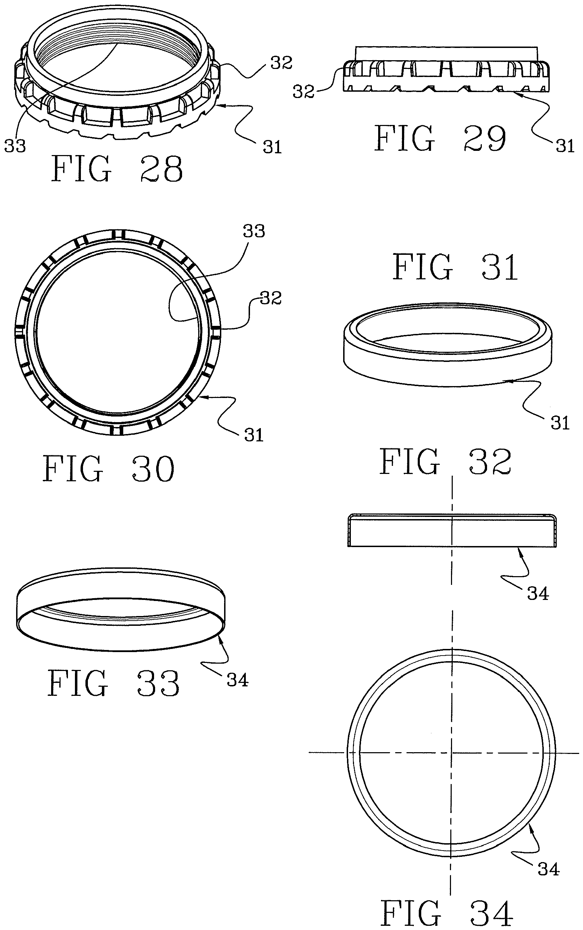

As shown in figures 22 and 28, the second member 7 affords a cavity 24, optionally cylindrical, suitable for defining, in cooperation with the first member 2, the housing compartment 9 for the housing of the mixer cartridge 10. Again with reference to figures 21 to 27 and 62, the second member 7 has, on the opposite side to the respective constraining element 8, a portion having sharp corners 7a suitable for engagingly receiving a suitable tool or a similar instrument which can be used to engage the second member 7 to the first member 2.

At the base of the portion with sharp edges 7a, the second member 7 is provided with a fastening element auxiliary 25 (visible in Figures 22 to 25), optionally a thread for its commitment to one of the hydraulic components of the apparatus A to which the mixing unit 1 is associated.

As shown in figures 21 to 24, 27 and 62, at the height of the constraining element 8 the second member 7 also has a external surface treatment 26 made such as to facilitate manual gripping during the engagement operations of the second member 7 on the first member 2. The surface treatment may comprise an alternation of cavities and protrusions (as shown in figures 21 to 24), a knurling, an application of high friction material, etc.

Once more with reference to figures 23 and 25, the constraining element 8 of the second member 7 develops internally of the cavity 24 so that, in a condition of mutual engagement of the first and second members 2 and 7, the first portion 3 of the first member 2 remains internally of the second member 7 by means of the respective constraining elements 4, 8. The second member 7 advantageously externally exhibits at least an annular seating 27 suitable for engagingly receiving at least a retaining seal (not shown as of known type).

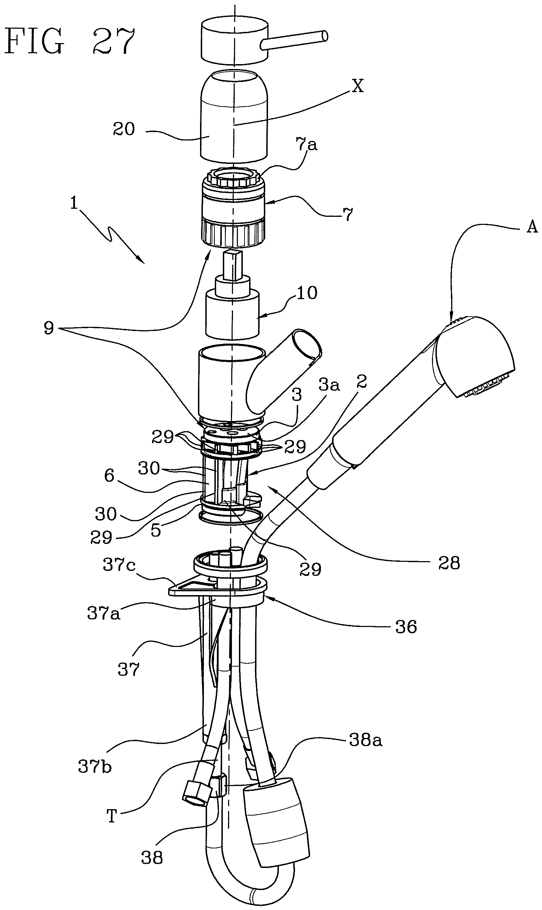

The retaining seal is configured so as to retain a covering element 20 (figure 27) by friction/interference, which covering element 20 is fitted at least partially to the second member 7, and therefore at least partially to the first 2. In this case too the covering element 20 has a narrow substantially cylindrical or tubular thickness and is advantageously made of a metal material, preferably in particular brass, aluminium, stainless steel or another according to needs. In fact, the reduced thickness means that the element can be obtained by deformation of a tubular segment of appropriate size and thickness, with extremely modest purchase and machining costs, such as to render the costs of the selected material largely irrelevant.

Optionally, as shown in figures 21, 27 and 62, the second member 7 is provided with two annular seatings 27 spaced along the main axis of development (X) and designed to engagingly receive corresponding retaining gaskets destined to perform the retaining function by friction/interference described above, of the covering element 20.

As shown in figures 21 and 27, the first member 2 extends mainly along the axis X and has, at the second portion 5, a lateral undercut 28 destined to define an access opening towards the intermediate portion 6. The lateral undercut 28 extends, at least in part, along the second portion 5, in particular over at least three quarters of the longitudinal extension thereof, in such a way as to give the first member 2, along a median longitudinal section thereof, substantially an L-shape, in particular an upturned L-shape. As can be seen in figures 21 and 27, the first member 2 has a plurality of lightening cavities 29. The cavities 29 are advantageously distributed at the first end portion 3 and the second portion 5.

Still with reference to figures 21 and 27, the lightening cavities 29 extend substantially parallel to the axis (X) of the member 2. In detail, the lightening cavities 29 of the member 2 which exhibit greater width extend along the entire development of the portion. Going into more detail, the cavities 29 of the lightening member 2 are delimited by respective reinforcing ribs 30, preferably plate-shaped, which develop from a peripheral area of the member 2 towards an inner zone thereof.

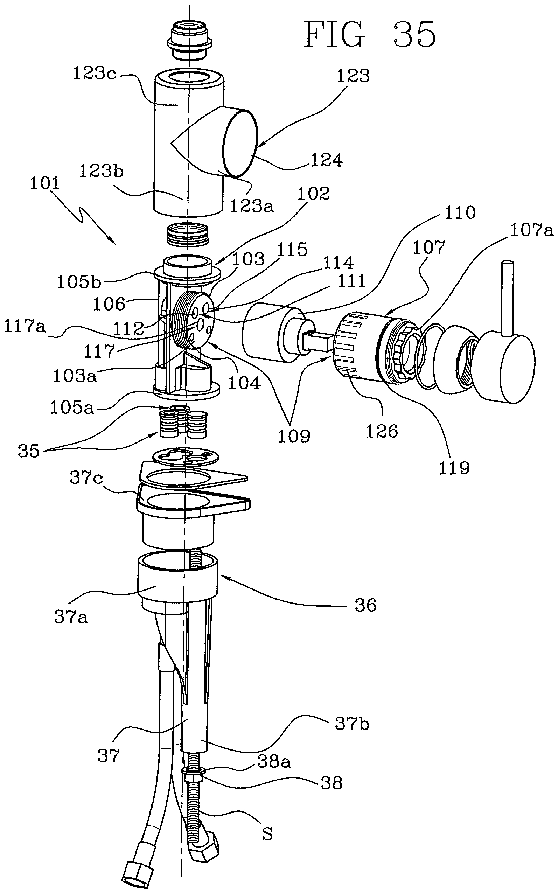

In accordance with the embodiments illustrated in figures 35 to 43, the mixing unit 101 comprises a first member 102 which has a first portion 103 having at least a first constraining member 104, a second portion 105a oriented transversally, optionally substantially perpendicular, to the first portion 102, and a third portion 105b, opposite the second portion 105a, which is also oriented transversally, optionally substantially perpendicular with respect to the first portion 102. The first member 102 also exhibits an intermediate portion 106 (figures 35 and 37 to 42) interposed and joined in one piece to the first 102, the second to the third portion 105a and 105b. The mixing unit 101 further comprises a second member 107 (figure 35), optionally having a substantially cylindrical shape, provided with a constraining element for removable engagement thereof with the first portion 103 of the first member 102.

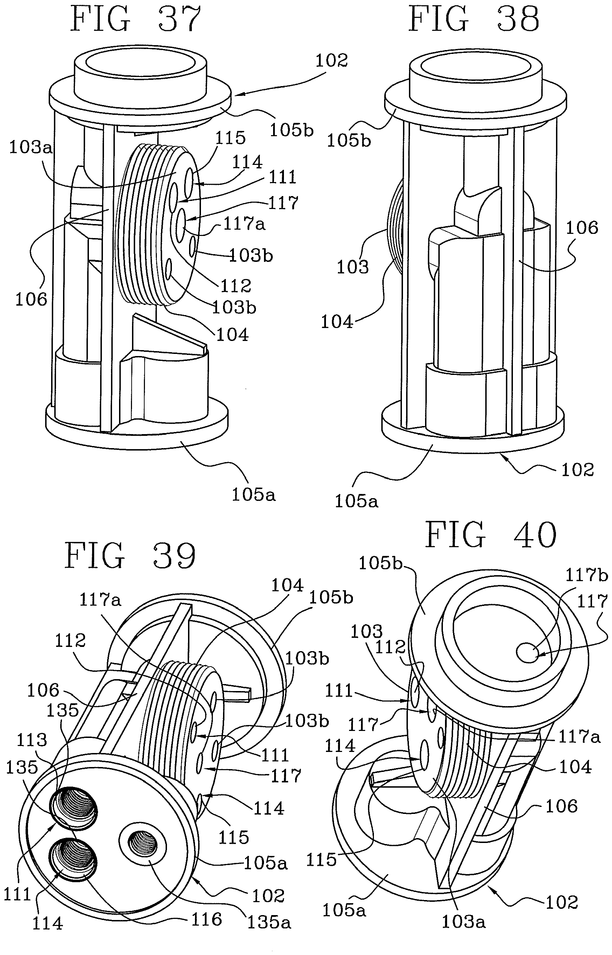

When mutually engaged, the first and the second member 102, 107 advantageously delimit at least a housing compartment 109 (figure 35) suitable for receiving at least one mixer cartridge 110 (figure 35). The first member 102 has a first through channel 111 (figures 35, 37, 39, 40 and 42) which extends across the intermediate portion 106, from a mouth 112 arranged at the housing compartment 109, to a mouth 113 (figure 39) arranged at the second portion 105a. The first through-channel 111 enables passage of a respective first fluid, preferably hot water.

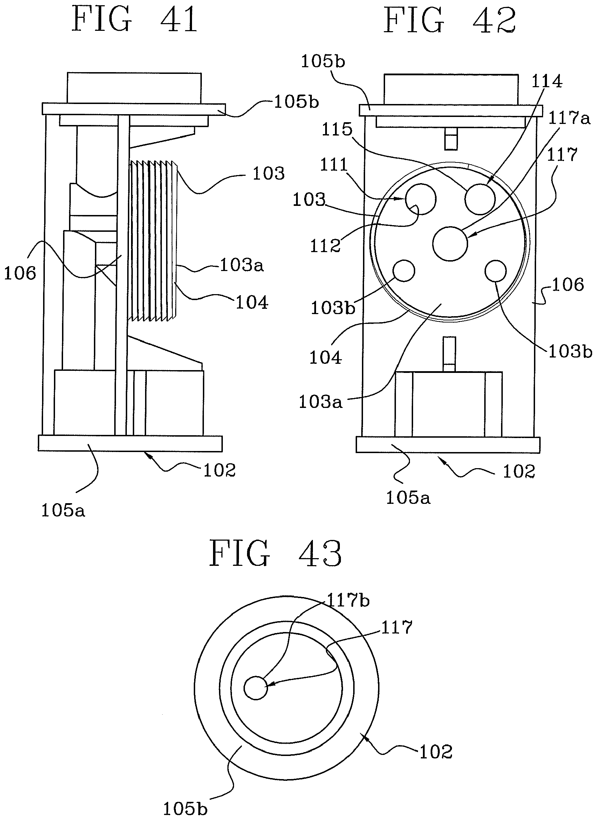

The first member 102 has a second through channel 114 (figures 35, 37, 39, 40 and 42) which extends across the intermediate portion 106 from a mouth 115 arranged at the housing compartment 109 to a mouth 116 (figure 39) arranged at the second portion 105a. The second through-channel 114 enables passage of a respective second fluid, preferably cold water. The first member 102 includes also a third channel 117 (figures 35, 37, 39, 40 and 42) which extends across the intermediate portion 116, distancingly from a mouth 117a arranged at the housing compartment 109 to a mouth 117b (figures 40 and 43) arranged at the third portion 105b. The third channel 117 enables passage of a respective mixed fluid of hot water and cold water.

Also in the case of this embodiment, the housing compartment 109 is advantageously configured such as to receive the above-mentioned mixer cartridge 110 so that it is in fluid communication with the first and the second through channel 111, 114. The mixing cartridge 110 is advantageously locatable in the housing compartment 109 resting on at least a rest surface 103a (figures 35, 37, 39, 40 and 42) of the first portion 103 of the first member 102.

As shown in the accompanying figures, the mixer cartridge 110 includes at least an adjusting element 110a which is configured such as to receive an adjustment element of an auxiliary manoeuvring element 110b. The manoeuvring element is an element which does not form part of the mixer unit 101, but is included in the hydraulic apparatus A. In more detail, the apparatus in operating conditions enables engagement of the auxiliary adjusting element via the adjusting element. In this way, by acting directly on the manoeuvring element the mixer cartridge 110 can also be moved.

In greater detail the driving element 110b enables adjustment of the incoming flow passage from the channels 111 and 114 and consequently the regulation of the outlet flow of the mixed fluid from the passage 117. The mixer cartridge 110 is advantageously locked against the support surface 103a of the first member 102, for example by the engagement of the second member 107 on the first member 102. The portion 103 is also equipped with at least two seatings 103b intended for the centring of the mixer cartridge 110. The seatings 103b are destined to engage with respective pins of the mixer cartridge 110, thus enabling correct assembly of the cartridge 110 to the first member 102. In addition to providing an excellent engagement, the seatings 103b ensure a correct fluid communication between the first member 102 and the mixer cartridge 110.

The first portion 103 of the first member 102 advantageously has a substantially cylindrical development and the first engaging member 104 of the first portion 103 of the first member 102 extends externally thereto. The second member 107, which is advantageously identical to the second member 7 of the embodiment shown in figures 21 to 27, has a cavity (not visible in the figures), optionally cylindrical, which in cooperation with the first member 102 is destined to define the housing compartment 109. In accordance with this embodiment, the constraining element 104 of the second member 107 is developed entirely inside the cavity. In this case, the first portion 103 of the first member 102 remains internally of the second member 107 when the members 102, 107 are mutually engaged by means of their respective constraining elements 104. Again with reference to figure 35, on the opposite side to the respective constraining element, the second member 107 has a portion with sharp corners 107a destined to engagingly receive a suitable tool or a like implement for engaging the second member 107 on the first member 102.

As shown in figure 35, at the height of the constraining element the second member 107 also exhibits a treatment of the external surface 126 predisposed to facilitate manual gripping during the engaging operations the second member 107 on the first member 102. The surface treatment may comprise an alternation of cavities and protrusions (as shown in figures 27 and 35), a knurling, a presence of high-friction material, etc. The second member 107 further has a fixing portion 107b, in particular an external thread, arranged at the portion with the sharp edges 107a, in particular arranged between the portion and the external surface treatment 126.

The fixing portion 107b enables engagement with at least a finishing element 107c that is not a part of the mixer unit 101 but which is included in the apparatus A. The finishing element 107c has a fixing portion, in particular a threading, able to cooperate with the fixing portion 107b thus ensuring the engagement between the second member 107 and the finishing element external 107c.

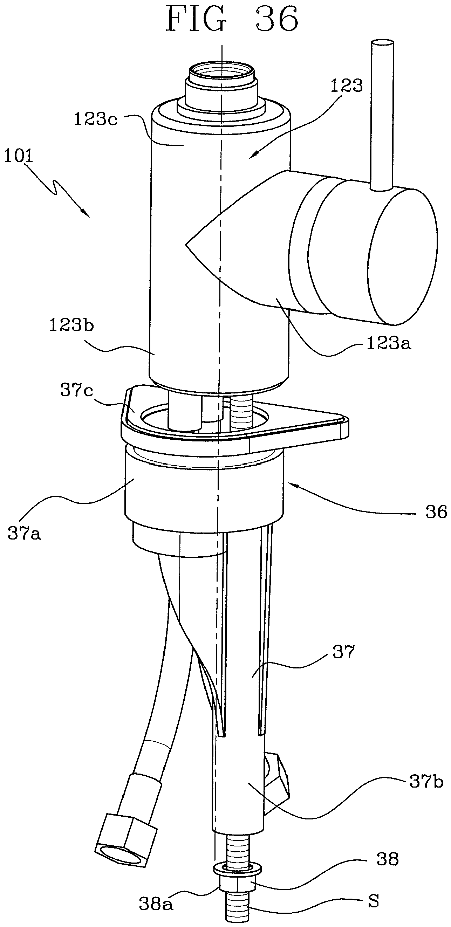

With reference to figures 35 and 36, a substantially T-shaped tubular covering element 123 is provided. The covering member 123 is keyable at least on the first member 102, preferably on both the members 102, 107 when they are mutually engaged. In detail, the covering member 123 is advantageously made of a metal material and has a first portion 123a which is destined to remain coupled with the first member 102 at the first portion 103 of the first member 102, a second portion 123b, transversal to the first portion 123a, destined to remain at the second portion 105a of the first member 102 and a third portion 123c, opposite the second portion and 123b transversal to the first portion 123a, destined to remain at the third portion 105b of the first member 102. The first portion 123a of the covering element 123 has a cavity 124 (figure 35) the transversal dimensions of which are not smaller than the transversal dimensions of the second member 107 so as to engagingly accommodate the second member 107 and the mixer cartridge 110 contained in the housing compartment 109.

The covering member 123, as can be seen in figure 35, also comprises an insert 123d which is configured such as to cooperate with a respective insert 105c of the second portion 105.

More in detail, the insert 105c is blocked at the portion 105b and is destined to receive the insert 123d such as to allow the blocking of the insert 123d on the covering element. The insert 123d is configured to receive at least one conduit for the transport of fluid, in particular receives the conduit for the transport of the mixed fluid.

Figure 36 illustrates the arrangement of the insert on the hydraulic apparatus A. In this case too the second member 107 exhibits, on the external surface thereof, at least an annular seating 119 (figure 35) provided with a gasket (not shown because of known type) destined to retain the covering element 123 by friction/interference when the first and the second members 102, 107 are mutually engaged and by the covering element 123.

In addition to the above-mentioned gasket, at least an engaging element, in particular a screw, can be used (not shown in the accompanying figures) for blocking the cylindrical cap on the first and second members. Once the cylindrical shell 123 is positioned, the engaging element passes through the shell 123 and engages the first and/or the second member of the mixer group such as to prevent disengagement of the cap from the first and the second member.

In accordance with a further embodiment, not illustrated, a mixer unit 1 can be provided having a configuration similar to the one shown in figure 35, that is to say in which the second and the third portion are transversal with respect to the first portion, and wherein the first portion protrudes from the first member to define a housing cavity 18 similar to the housing cavity represented in the embodiment of figures 1 to 11, 13 and 18 to 20, and the second portion has a substantially annular conformation with an external constraining element destined to engage the first engaging member of the first member in the housing cavity thereof.

In an advantageous aspect, the second member 7, 107, in particular the first and the second members 2, 102, 7, 107, are at least partly made of a plastic material, especially polyamide (Nylon-PA) and/or propylene (PP - Moplen), and/or polyarylamide (Ixef), and/or polyoxymethylene (POM - acetal), and/or polycarbonate (PC - Trirex) and/or polycarbonate alloy ABS (PC/ABS - Giasiblend), and/or polyurethane (TPU - Laripur), and/or polyphenylene sulphide (PPS - Supec) and/or polyetherimide (PEI - Ultem), and/or polybutylene terephthalate (PBT - Pibiter), and/or polysulfone (Udel) and/or polyphenylene oxide/ether (PPO/PPE - Noryl) or similar materials reinforced with fibre, for example glass fibre, reinforced Noryl, reinforced propylene; advantageously, at least the second member 7, 107, in particular the first and the second member 2, 102, 7, 107. In a further advantageous aspect, other components too of the mixer unit 1 and/or hydraulic apparatus A can be made of plastic and/or reinforced plastic moulding. An example of component realisable in this way is a fastening ring nut 31, shown in figures 28 to 30, which has a substantially annular overall shape. In detail, the fastening ring 31 externally exhibits a plurality of reliefs 32 that can facilitate the grip and, internally, a fastening element 33, preferably a thread, which enables engagement of another component, also threaded. The ring nut 31 is advantageously keyable to an annular structure 34, made of a metal material, in particular in particular brass, aluminium, stainless steel or another still according to needs, on which it is fixed in a known way.

In a further advantageous aspect, the first fastening element 4, 104 of the first portion 3, 103 of the first member 2, 102 includes at least a thread having a substantially saw-tooth profile defined by a first surface having a substantially helical development extending from the first 3, 103 to the second portion 5, 105a away from the respective main axis X of the first member 2, 102 and a second surface which is also a substantially helical, which extends substantially perpendicularly to the main axis X of the first member 2, 102. In particular, the constraining element 4, 104 of the portion 3 is a standard thread. In this case, the coupling element 8 of the second member 7, 107 includes at least a thread that has a substantially saw-tooth profile defined by a first surface having a substantially helical development that is also inclined to the main axis X, and a second surface, also substantially helical, that extends substantially perpendicularly to the main axis X of the second member 7, 107. In particular, the coupling element 8, 108 of the second member is a standard thread. The thread of the second member 7, 107 is configured such as to engage the thread of the first portion 3, 103 of the first member 2, 102 so as to maintain the first and the second member 2, 102, 7, 107 joined together and to delimit the housing compartment 9, 109. In detail, when the first and the second member 2, 102, 7, 107 are mutually engaged, the second surfaces of the respective profiles thereof are mutually abutting.

As shown in figures 1, 19, 20 and 35, the first member 2, 102 is provided, for the first and the second through channel 11, 111, 114, 114, with at least a hollow cylindrical insert 35, 135. The first member 2, 102 is also provided with at least a hollow cylindrical insert 35a, 135a. In particular, the above-mentioned inserts 35, 35a, 135, 135a are made of a metal material, in particular brass or steel, or are made of a plastic material, in particular a material different from the material of the first member. Each hollow cylindrical insert 35, 135, 35a, 135a is unremovably coupled to the first member 2, 102 at the second portion 5, 105 thereof.

The insert 35, 135 is internally threaded to enable removable connection of the respective through channel 11, 111, 14, 114 to at least a conduit which is not a part of the mixer unit 1 since it is a component of the respective hydraulic equipment A to which the mixer group 1 is associated.

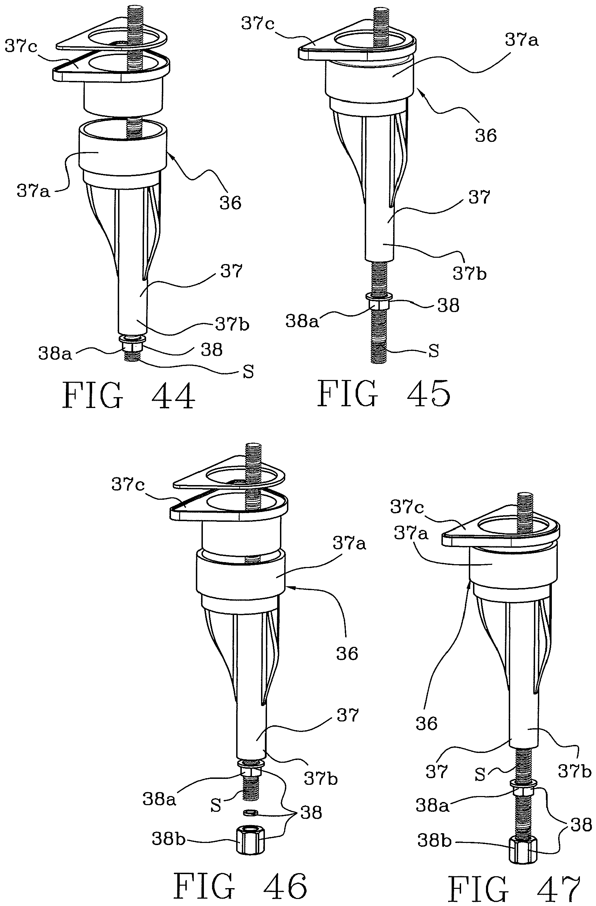

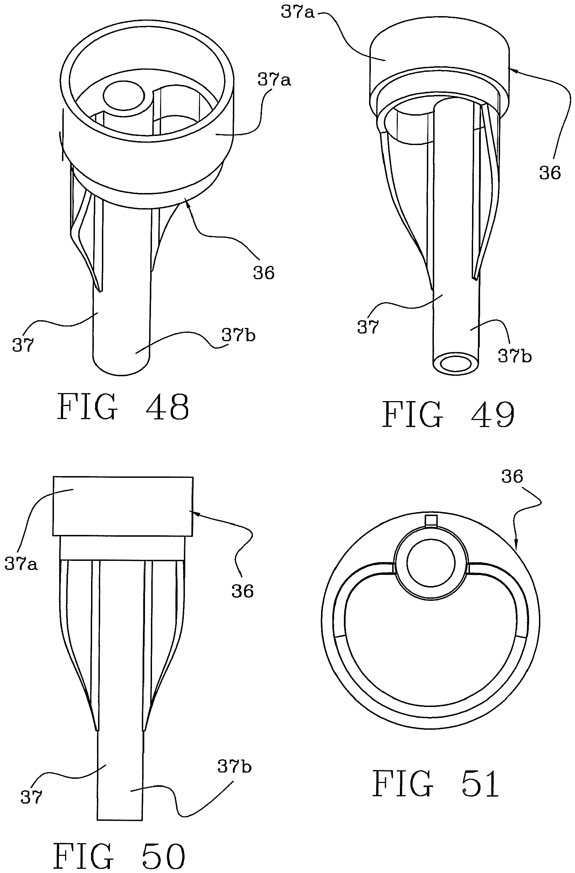

The insert 35a, 135th is internally threaded to enable removable connection of the first member to at least a component which is not a part of the mixer unit 1 as it is a component of the respective hydraulic apparatus A to which the mixing unit 1 is associated. In detail, each cylindrical insert cable 35, 35a, 135, 135a exhibits a cylindrical external surface having at least an annular groove, in particular a plurality thereof, each extending transversally to the longitudinal axis thereof. Each annular groove is destined to accommodate the plastic material of the first member 2, 102, during the moulding thereof, in such a way as to ensure unremovable joining there-with. As shown in figures 18, 27, 35, 36 and 44 to 51, the mixer unit 1 can be provided with at least a fixing bracket 36 having a substantially elongate body 37. The fixing bracket 36 is predisposed to operate below a respective fixing plane (not shown) on which the above-mentioned hydraulic apparatus A is fixed, such as for example a sink or a similar plane disposed in the vicinity of at least one tub (not shown) of a respective kitchen (not shown). In other words, the fixing bracket 36 is arranged in such a way as to operate in opposition to the second end portion 5, 105a of the first member 2, 102 of the mixer unit 1 of the respective hydraulic equipment A, so that the respective engaging plane destined to support it is interposed between the first member 2, 102 and the fixing bracket 36.

The elongate body 37 of the bracket 36 has a first end 37a destined to engage, by means of the interposition of the aforementioned sink plane and appropriate connecting elements (not shown in the figures) and/or additional components, the second end portion 5, 105a of the first member 2, 102 of the respective mixer unit 1, and a second end 37b, opposite the first end 37a, provided with appropriate blocking means 38 capable of packing the mixer unit 1 and the fixing bracket 36.

In particular the blocking means 38 are coupled to the cylindrical insert 35a, 135a arranged on the first member 2, 102. The first end 37a of the elongate body 37 has a rest plate 37c having a substantially triangular shape. The elongate body 37 comprises at least a body having a substantially cylindrical/tubular conformation extending from the rest plate 37c in a distancing direction. The fixing bracket 36 advantageously has at least a channel extending between the first and second ends 37a, 37b of the elongate body 37. The channel is preferably destined to engagingly receive a support rod S or a respective conduit T.

As can be seen in the exploded view of figure 35, the support plate 37c is a solid body that is distinct from the separate mounting bracket 36. In greater detail, the support plate 37c is engageable to the bracket 36 in a plurality of operating positions, in particular in which the bracket 36 can rotate with respect to the rest plate 37c. The rotation of the bracket 36 the bracket 36 to be oriented in a series of positions such as to facilitate the passage and the subsequent attachment of the fluid passage conduits. The blocking means 38 advantageously comprise at least a nut 38a and a locknut 38b operatively engageable on the duct T or S support rod such as to push the bracket 36 against the first member 2 of the mixer unit 1. In a further configuration, the mounting bracket 36, as shown in figures 62 to 67, has a cavity 36a suitable for containing and at least partially supporting the mixer assembly 1.

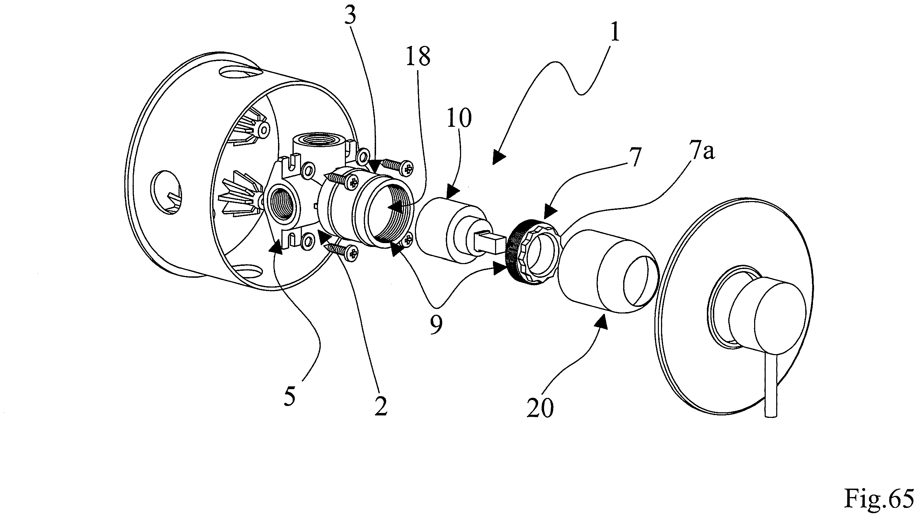

The fixing bracket 36 is predisposed to operate internally of a respective mounting wall (not shown) on which the above-mentioned hydraulic apparatus A is fixed, for example a shower wall. In other words, the fixing bracket 36 has a predetermined number of passage holes 36b through which pass the conduits that carry the fluid into and out of the mixer unit 1. The bracket 36 comprises at least a fixing portion 36c configured such as to engage at least a respective fixing portion 36d of the mixer unit 1. Figures 62 and 65 non-limitingly illustrate the fixing portions 36c of the cross-shaped bracket which enable both the fastening and the centring of the mixer unit in the bracket 36. The fixing portions 36d of the mixer unit are at least partially complementary to the fixing portions 36c to enable correct reciprocal engagement of the portions.

The mixer unit 1 of the present description obviates the problems encountered in the prior art and achieves important advantages.

Primarily, the above-described mixer unit can be made by moulding plastic material of any existing type, being particularly lightweight and resistant to the oxidizing effect of water. Naturally, being realised by moulding of suitable plastic materials, the above-described spacer elements are achievable rapidly, practically and without the need for specialized labour. It should also be considered that the use of plastics, cheaper than brass, together with the simple, quick and inexpensive moulding step of the spacer elements, enable a significant reduction in overall production and/or marketing costs of mixer groups and any hydraulic apparatus to which they are associated.

## Claims

1. A mixer group (101) for hydraulic apparatus, in particular taps, mixers, shower heads and/or the like, the mixer group (101) comprising:
a first member (102) exhibiting a first portion (103) provided with at least a first constraining element (104), a second portion (105a) orientated transversally to the first portion (103), and a third portion (105b), opposite the second portion (105a), also orientated transversally with respect to the first portion (103), the first member (102) exhibiting an intermediate portion (106) interposed and joined in a piece to the first (103), the second (105a) and the third portion (105b);
a second member (107), optionally having a substantially cylindrical conformation,
provided with a constraining element for removable engagement thereof to the first portion (103) of the first member (102), the first member (102) and the second member (107) delimiting, in a condition of reciprocal engagement, at least a housing chamber (109), the first member (102) exhibiting a first through-channel (111) which extends from a mouth (112) arranged at the housing chamber (109) to a mouth (113) arranged at the second portion (105a) through the intermediate portion (106) such as to enable transit of a respective first fluid, the first member (102) exhibiting a second through-channel (114) which extends from a mouth (115) arranged at the housing chamber (109) to a mouth (116) arranged at the second portion (107) through the intermediate portion (106) such as to enable transit of a respective second fluid, the first member (102) comprising a third channel (117) which extends distancingly from a mouth (117a) arranged at the housing chamber (109) to a mouth (117b) arranged at the third portion (105b) through the intermediate portion (106) such as to enable transit of a respective mixed fluid, the housing chamber (109) being configured such as to receive at least a mixer cartridge (110) and enable a fluid communication with the first and second through-channels (111,114),
the second member (107), in particular the first and second member (102, 107), being at least partly realised in a reinforced plastic material, optionally polyamide (PA- Nylon) and/or propylene (PP - Moplen), and/or polyarylamide (Ixef), and/or polyoxymethylene (POM - acetal), and/or polycarbonate (PC - Trirex) and/or polycarbonate alloy ABS (PC/ABS - Giasiblend), and/or polyurethane (TPU - Laripur), and/or polyphenylene sulphide (PPS - Supec) and/or polyetherimide (PEI - Ultem), and/or polybutylene terephthalate (PBT - Pibiter), and/or polysulphone (Udel) and/or polyphenyl oxide/ether (PPO/PPE - Noryl) or like materials and being obtained by moulding.

2. The mixer group (101) of claim 1, further comprising at least a mixer cartridge (110) locatable in the housing chamber (109) resting on at least a rest surface (103a) of the first portion (103) of the first member (102), the mixer cartridge (110) being in fluid communication with the first and second through-channels (111, 114) and being blocked against the rest surface (103a) of the first member (102), for example by the second member (107).

3. The mixer group (101) of claim 1 or 2, wherein at least the second member (107), in particular the first and second member (102, 107), is realised in a reinforced plastic material, in particular polyamide (PA- Nylon) and/or propylene (PP - Moplen), and/or polyarylamide (Ixef), and/or polyoxymethylene (POM - acetal), and/or polycarbonate (PC - Trirex) and/or polycarbonate alloy ABS (PC/ABS - Giasiblend), and/or polyurethane (TPU - Laripur), and/or polyphenylene sulphide (PPS - Supec) and/or polyetherimide (PEI - Ultem), and/or polybutylene terephthalate (PBT - Pibiter), and/or polysulphone (Udel) and/or polyphenyl oxide/ether (PPO/PPE - Noryl) or like materials reinforced with fibre, for example glass fibre, reinforced noryl, reinforced propylene, the second member (107), in particular the first and second members (102, 107) being obtained by moulding of the reinforced plastic material.

4. The mixer group (101) of one or more of the preceding claims, wherein:
the first portion (103) of the first member (102) exhibits a substantially cylindrical envelopment, the first constraining element (104) of the first portion (103) of the first member (102) developing externally of the first portion (103);
the second member (107) exhibits a cavity which is optionally cylindrical, suitable for defining, in cooperation with the first member (102), the housing chamber (109), the constraining element of the second member (107) developing internally of the cavity,
the first portion (103) of the first member (102) remaining internally of the second member (107) when the members (102, 107) are reciprocally engaged by means of the respective constraining elements (104).

5. The mixer group (101) of claim 4, comprising a substantially T-shaped tubular covering element (123) keyable on the first member (102), the covering element (123) being, in particular, made of a metal material, the covering element (123) exhibiting a first portion (123a) suitable for remaining, in the coupling condition with the first member (102) at the first portion (103) of the first member (102), a second portion (123b), transversal to the first portion (123a), suitable for remaining at the second portion (105a) of the first member (102) and a third (123c) opposite the second (123b) and transversal to the first (123a), suitable for remaining at the third portion (105b) of the first member (102), the first portion (123a) of the covering element (123) exhibiting a cavity (124) transversal dimensions of which are not smaller than transversal dimensions of the second member (107) such as to receivingly engage the second member (107) and the mixer cartridge (110).

6. The mixer group (101) of claim 5, wherein the second member (107) exhibits, on an external surface thereof, at least an annular seating (119) provided with a seal, the seal retaining, by friction/interference, the second member (102) with respect to the first portion (123a) of the covering element (123), when the first and the second member (102, 107) are reciprocally engaged.

7. The mixer group (101) of any one of the preceding claims, wherein the first constraining element (104) comprises at least a thread exhibiting a profile that is substantially saw-toothed defined by a first substantially helically-developing surface which extends diagonally to a longitudinal axis of the first portion (103) of the first member (102) and a second surface, also substantially helically developing, extending substantially perpendicular to the longitudinal axis of the first portion (103) of the first member (102).

8. The mixer group of claim 7, wherein the constraining element of the second member (107) comprises at least a thread exhibiting a substantially saw-toothed profile defined by a first surface that develops substantially helically and is inclined with respect to a longitudinal axis of the second member (107) and a second surface, also substantially helical, extending substantially perpendicular to the longitudinal axis of the second member (107), the thread of the second member (107) being suitable for engaging the thread of the first portion (103) of the first member (102) in order to maintain the first member (102) and the second member (107) joined such as to delimit the housing chamber (109), in particular the second surfaces of the respective profiles reciprocally abutting in engaged conditions of the first and the second member (102, 107),

9. The mixer group (101) of any one of the preceding claims, wherein the first member (102) is provided, at least for the first and second through-channels (111, 114), with at least a hollow cylindrical insert (135) in particular made of a metal material, in particular steel or brass, or made of a plastic material different to the material of the first member, each hollow cylindrical insert (135) being unremovably coupled to the first member (102) at the second portion (105a) thereof and being internally threaded such as to enable removable connection of the respective through-channel (111, 114) to at least a conduit (T) which is not a part of the mixer group (101).

10. The mixer group (101) of claim 9, wherein each hollow cylindrical insert (135) exhibits an external cylindrical surface provided with at least an annular channel extending transversally to the longitudinal axis thereof, the annular channel receiving the plastic material of the first member (102), during the stage of moulding thereof, in order to ensure an unremovable joint there-with.

11. The mixer group (101) of one or more of the preceding claims, wherein the first member (102) exhibits a plurality of lightening cavities, in particular made by moulding.

12. A hydraulic apparatus (A), in particular a tap, mixer or a like regulating device of liquid flows, comprising at least a fluid dispensing device switchable between a non-operating condition in which it does not dispense fluid, and an operating condition, in which it dispenses at least a fluid,
**characterised in that** it comprises at least a mixer group (101) as in any one of the preceding claims.
